# EUROPÄISCHE PATENTSCHRIFT

(11) **EP 2 464 955 B1**
(45) Veröffentlichungstag und Bekanntmachung des Hinweises auf die Patenterteilung: **20.11.2013**
(21) Anmeldenummer: 10734133.1
(22) Anmeldetag: 21.07.2010
(51) Int. Cl.: G01L 19/14, G01L 19/06

(54) **RELATIVDRUCKSENSOR**
RELATIVE PRESSURE SENSOR
CAPTEUR DE PRESSION RELATIVE

(30) Priorität: 12.08.2009 DE 102009028488
(43) Veröffentlichungstag der Anmeldung: 20.06.2012
(73) Patentinhaber: Endress+Hauser GmbH+Co. KG, 79689 Maulburg (DE)
(72) Erfinder: KRUSEMARK, Olaf, 34131 Kassel (DE); GILL, Norbert, 34246 Vellmar (DE)
(74) Vertreter: Andres, Angelika Maria
(86) Internationale Anmeldenummer: PCT/EP2010/060516
(87) Internationale Veröffentlichungsnummer: WO 2011/018311

(56) Entgegenhaltungen:
- EP-A1- 1 065 488
- EP-A1- 1 070 948
- WO-A1-2004/042338
- DE-A1- 10 134 360

## Beschreibung

Die vorliegende Erfindung betrifft einen Relativdrucksensor, zum Erfassen der Differenz zwischen einem Mediendruck und dem Atmosphärendruck.

Ein gattungsgemäßer Relativdrucksensor umfasst
einen Druckmesswandler, wobei der Druckmesswandler eine Messmembran und einen Substratkörper aufweist, wobei zwischen der Messmembran und dem Substratkörper eine Referenzdruckkammer ausgebildet ist,
einen Trägerkörper, wobei der Substratkörper mittels einer drucktragenden Klebung mit dem Trägerkörper verbunden ist,
wobei sich durch den Substratkörper und den Trägerkörper ein Referenzdruckpfad erstreckt, um den Referenzdruck in die Referenzdruckkammer einzuleiten,
einen Messwerkkörper, in dem eine Wandlerkammer ausgebildet ist,
wobei die Wandlerkammer eine erste Öffnung und eine zweite Öffnung aufweist,
wobei der Druckmesswandler durch die erste Öffnung in die Wandlerkammer eingebracht ist und mittels des Trägerkörpers in der Wandlerkammer gehalten wird,
wobei der Trägerkörper die erste Öffnung druckdicht verschließt, und
wobei eine der Referenzdruckkammer abgewandte Seite der Messmembran durch die zweite Öffnung mit dem Mediendruck beaufschlagbar ist.

Bei gattungsgemäßen Relativdrucksensoren erweist es sich als Problem, dass die drucktragende Klebung feuchteempfindlich ist. Dies führt zu mechanischen Spannungen im Druckmesswandler, die letztlich Messfehler bewirken. Dazu beschreibt die deutsche Patentanmeldung mit dem Aktenzeichen 102008043175 Ansätze, die Topologie der drucktragenden Klebung, durch welche bei den gattungsgemäßen Relativdrucksensoren der Referenzdruckpfad verläuft, dergestalt zu verändern, dass die drucktragende Klebung mit einer Feuchtebarriere vor der Referenzluft geschützt wird.

Wenngleich diese Ansätze eine Verbesserung bewirken, sind sie keine grundsätzlichen Lösungen, da die Arten der Barrieren, beispielsweise eine Silikonschicht auf der Klebung oder ein Gummischlauch zwischen Klebung und Referenzluftpfad nicht hermetisch dicht sind und insofern im Verhältnis zum Aufwand hinsichtlich der erzielten Verbesserung noch zu wünschen übrig lassen.

Die europäische Patentanmeldung EP 1065488A1 offenbart einen kapazitiven, keramischen Relativdrucksensor, mit einer gasgefüllten Messkammer, die mit einer keramischen Messmembran verschlossen ist, auf deren Außenseite in Betrieb anzumessender Druck einwirkt, einen gasgefüllten kompressiblen federelastischen Balg, auf den in Betrieb von außen ein Referenzdruck einwirkt, dessen Innenvolumen von dessen Referenzdruck abhängt, und das zur Anpassung eines in der Messkammer herrschenden Innendrucks an den Referenzdruck mit der Messkammer kommuniziert, und einem Wandler zur Wandlung einer druckabhängigen Verformung der Messmembran in eine elektrische Messgröße. In der näheren Beschreibung wird offenbart, dass der federelastische Balg insbesondere Metallmembranen, beispielsweise Wellmembranen oder federelastische Kunststoffmembranen aufweisen kann, wobei hier die Elastizität offensichtlich eine große Rolle spielt, Elastizität geht jedoch mit einer Rückstellkraft einher, welche jedoch zwingend unvermeidlich zu einem verfälschten Referenzdruck und damit zu einem Messfehler beiträgt.

Andere Drucksensoren sind in DE 10134360, EP 1070948 und WO 2004 042338 offenbart.

Es ist daher eine Aufgabe der vorliegenden Erfindung einen Relativdrucksensor bereit zu stellen, welcher die Nachteile des Standes der Technik überwinden und ohne Beeinträchtigung der Messgenauigkeit einen zuverlässigen Feuchteschutz für die Klebung des Substratkörpers auf den Trägerkörper gewährleistet.

Die Aufgabe wird erfindungsgemäß gelöst durch den Relativdrucksensor gemäß dem unabhängigen Patentanspruch 1:

Der erfindungsgemäße Relativdrucksensor umfasst einen Druckmesswandler, wobei der Druckmesswandler eine Messmembran und einen Substratkörper aufweist, wobei zwischen der Messmembran und dem Substratkörper eine Referenzdruckkammer ausgebildet ist, einen Trägerkörper wobei der Substratkörper mittels einer drucktragenden Klebung mit dem Trägerkörper verbunden ist, wobei sich durch den Substratkörper und den Trägerkörper ein Referenzdruckpfad erstreckt, um den Referenzdruck in die Referenzdruckkammer einzuleiten, einen Messwerkkörper, in dem eine Wandlerkammer ausgebildet ist, wobei die Wandlerkammer eine erste Öffnung und eine zweite Öffnung aufweist, wobei der Druckmesswandler durch die erste Öffnung in die Wandlerkammer eingebracht ist und mittels des Trägerkörpers in der Wandlerkammer gehalten wird, wobei der Trägerkörper die erste Öffnung druckdicht verschließt, und wobei eine der Referenzdruckkammer abgewandte Seite der Messmembran durch die zweite Öffnung mit dem Mediendruck beaufschlagbar ist, dadurch gekennzeichnet, dass der Referenzdruckpfad einen gasgefüllten, geschlossenen Abschnitt aufweist, der sich von der Referenzdruckkammer zumindest bis durch die drucktragende Klebung erstreckt, wobei der geschlossene Abschnitt mittels einer flexiblen, metallisierten Kunststofffolie gasdicht verschlossen ist.

In einer Weiterbildung der Erfindung erstreckt der gasgefüllte, geschlossene Abschnitt sich zumindest bis durch den Trägerkörper.

In einer Ausgestaltung dieser Weiterbildung der Erfindung weist der gasgefüllte, geschlossene Abschnitt ein Röhrchen auf, welches an dem Trägerkörper befestigt ist.

Die Kunststofffolie kann beispielsweise entlang einer umlaufenden Dichtfläche gasdicht mit dem Röhrchen verbunden sein, wobei die umlaufende Dichtfläche eine Fläche umschließt, die größer ist als die Querschnittsfläche des Röhrchens.

Dazu kann das Röhrchen beispielsweise an seinem der Referenzdruckkammer abgewandten Ende eine Endfläche aufweisen, deren Flächennormale gegenüber der Längsachse des Röhrchens verkippt ist, um eine größere Fläche zu erzielen, oder an dem Röhrchen kann ein formsteifer Folienträgerkörper anschließen, durch den der gasgefüllte, geschlossene Abschnitt des Referenzdruckpfads sich erstreckt, wobei die Kunststofffolie entlang einer umlaufenden Dichtfläche gasdicht mit dem Folienträgerkörper verbunden ist, wobei die umlaufende Dichtfläche eine Fläche umschließt, die größer ist als die Querschnittsfläche des Röhrchens.

Die Verbindung der Folie mit dem Röhrchen bzw. dem Folienträgerkörper kann beispielsweise durch Kleben, Schweißen, Crimpen oder durch Einspannen zwischen dem Röhrchen bzw. dem Folienträgerkörper und einem Einspannkörper mit einer ringförmigen Einspannfläche verbunden werden.

Der Druck des Gases in dem geschlossenen, gasgefüllten Abschnitt des Referenzdruckpfads, sollte im Idealfall gleich dem Atmosphärendruck sein, der auf die Folie von deren Außenseite einwirkt. Dies bedeutet, dass Volumenschwankungen des eingeschlossenen Gases von der flexiblen Folie aufgenommen werden sollten. Die Volumenschwankungen des eingeschlossenen Gases sind bedingt durch dessen Temperaturschwankungen und durch Schwankungen des Atmosphärendrucks und sind im wesentlichen proportional zur Menge des eingeschlossenen Gases. Die Menge des eingeschlossenen Gases sollte beispielsweise so gewählt sein, dass bei einer mittleren Temperatur und einem mittleren Atmosphärendruck, die Folie in einer mittleren Lage gehalten wird. Die Menge des Gases ist damit durch das Volumen des geschlossenen Abschnitts des Referenzdruckpfads bei der mittleren Lage der Folie vorgegeben. Insoweit ist es erforderlich, das Volumen des geschlossenen Abschnitts zu minimieren, wenn der maximale Hub der Folie auf ein Mindestmaß begrenzt werden soll.

In einer Ausgestaltung der Erfindung weist die erste Öffnung der Wandlerkammer eine lichte Querschnittsfläche A₁ auf, durch welche die Messmembran in die Wandlerkammer eingebracht wird, wobei der geschlossene Abschnitt des Referenzdruckpfads zwischen der Messmembran und der Folie einen Länge L aufweist, wobei gilt: L/(A₁/π)^{1/2} < 4, vorzugsweise L/(A₁/π)^{1/2} < 3. Auf diese Weise ist das Volumen des geschlossenen Abschnitts durch Erstreckung senkrecht zur Ebene der Öffnung begrenzt.

In einer Ausgestaltung der Erfindung weist die erste Öffnung der Wandlerkammer eine lichte Querschnittsfläche A₁ auf, wobei die senkrechte Projektion der Folie auf die Querschnittsfläche A₁ eine Projektionsfläche A₂ bildet, wobei gilt: A₂/A₁<1, insbesondere A₂/A₁<0,9 bevorzugt A₂/A₁<0,8. Bei dieser Bemessung ist es möglich, um die Folie herum noch elektrische Durchführungen aus der Wandlerkammer herauszuführen, die den Referenzdruckpfad umgeben.

Nach einer Ausgestaltung der Erfindung kann der Druckmesswandler ein (piezo-)resistiver mit mindestens zwei Widerstandselementen oder ein kapazitiver Druckmesswandler mit mindestens zwei Elektroden sein, wobei der Relativdrucksensor weiterhin eine elektronische Schaltung aufweist, deren Eingänge an die Widerstandselemente bzw. die Elektroden des Druckmesswandlers angeschlossen sind, wobei der geschlossene Abschnitt des Referenzdruckpfads räumlich zwischen dem Druckmesswandler und der elektronischen Schaltung angeordnet ist.

Der Begriff "drucktragend" bezeichnet im Zusammenhang mit der vorliegenden Erfindung die Eigenschaft, dass jene Kräfte, welche aufgrund einer Druckbeaufschlagung des Druckmesswandlers in der Wandlerkammer auf die Klebung einwirken, praktisch zu keinen irreversiblen Verformungen der Klebung führen, die eine Auswirkung auf die den Nullpunkt und die Spanne des Sensors haben könnten.

Die Schubspannung in der Klebung sollte bei einer Druckbeaufschlagung des Druckmesswandlers beispielsweise nicht mehr als das E/500, vorzugsweise nicht mehr als das E/1000 betragen, wobei E das Elastizitätsmodul des für die Klebung verwendeten Werkstoffs ist.

Es ist offensichtlich, dass in die tatsächlich auftretende Schubspannung drei Größen eingehen, nämlich erstens die Materialeigenschaften des Werkstoffs, zweitens die wirksame Fläche der Klebung und drittens der anliegende Druck, bzw. der spezifizierte Maximaldruck.

Als Werkstoff für die Klebung sind insbesondere Epoxidklebstoffe Elastizitätsmoduln von beispielsweise 2 GPa bis 4 GPa geeignet.

Die wirksame Fläche der Klebung ist in einer Weiterbildung der Erfindung gegenüber der Grundfläche des Substratkörpers reduziert, um auf diese Weise eine Einschnürung zwischen Substratkörper und Trägerkörper auszubilden. Die Einschnürung bewirkt, dass mechanische Spannungen im Substratkörper aufgrund unterschiedlicher Wärmeausdehnungskoeffizienten von Substratkörper und Trägerkörper gegenüber einer Ausgestaltung mit einer Klebung über die gesamte Basisfläche des Substratkörpers reduziert sind. In einer Weiterbildung der Erfindung beträgt die vom Rand der Klebung eingeschlossene Fläche nicht mehr als 18%, vorzugsweise nicht mehr als 12% und weiter bevorzugt nicht mehr als 6% der Basisfläche des Substratkörpers.

Die Erfindung wird nun anhand der in den Zeichnungen dargestellten Ausführungsbeispiele erläutert. Es zeigt:
- Fig. 1:: eine perspektivische Darstellung eines ersten Ausführungsbeispiels eines erfindungsgemäßen Druckmesswandlers;
- Fig.2:: eine perspektivische Darstellung eines zweiten Ausführungsbeispiels eines erfindungsgemäßen Druckmesswandlers; und
- Fig. 3:: ein Längsschnitt durch ein Ausführungsbeispiel eines erfindungsgemäßen Relativdrucksensors.

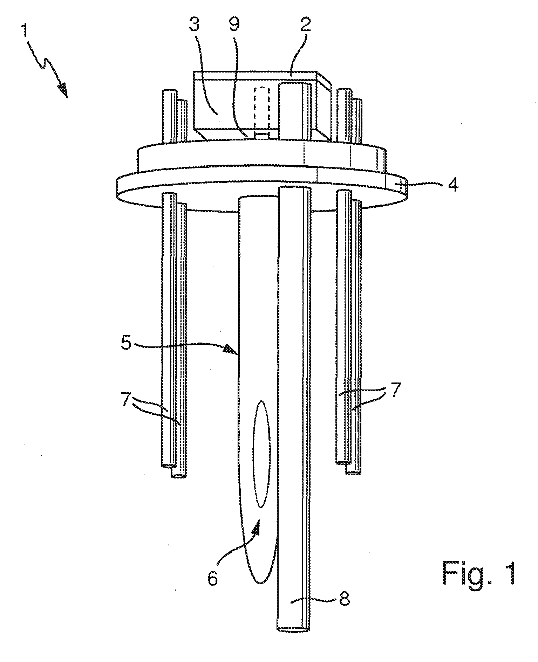

Der in Figur 1 dargestellte Druckmesswandler 1 umfasst einen Siliziumchip 2 mit einer Messmembran, die mittels anodischen Verbindens an einem wesentlichen quaderförmigen Substratkörper 3 befestigt ist, welcher ein Borosilikatglas (Pyrex) aufweist, und welcher mit einer Referenzdruckbohrung durchsetzt ist. Der Substratkörper 3 ist an einem plattenförmigen Trägerkörper 4 mittels einer ringformigen drucktragenden Klebung 9 befestigt. An dem Trägerkörper 4 schließt ein Referenzluftrohr 5 an, welches mit einer zentralen Bohrung durch den Trägerkörper 4, der drucktragenden Klebung 9, und der Referenzdruckbohrung durch den Substratkörper 3 fluchtet. Das Referenzdruckrohr 5 weist eine schräg geschnittene Endfläche 6 auf, an deren Rand eine hier nicht dargestellte metallisierte Kunststofffolie befestigt wird, um den Referenzdruckpfad durch das Referenzrohr 5 druckdicht zu verschließen. Der solchermaßen gebildete geschlossene Abschnitt des Referenzdruckpfads erstreckt sich von der metallisierten Kunststofffolie bis unter die Messmembran des Halbleiterchips 2, wobei der geschlossene Abschnitt durch das Referenzdruckrohr 5, die Bohrung durch die Trägerplatte 4, die ringförmige drucktragende Klebung 9 zwischen dem Trägerkörper 4 und dem Substratkörper 3 und die Referenzdruckbohrung durch den Substratkörper 3 in eine Referenzdruckkammer unter der Messmembran des Halbleiterchips 2 verläuft. Auf einem Kreisumfang des Trägerkörpers 4 sind um das Referenzdruckrohr 5 herum elektrische Durchführungen 7 angeordnet, um hier nicht dargestellte piezoresistive Widerstandselemente des Halbleiterchips 2 mittels Bonddrähten zwischen den elektrischen Durchführungen 7 und dem Halbleiterchip 2 zu kontaktieren.

Weiterhin erstreckt sich durch den Trägerkörper 4 ein Befüllrohr 8, durch welches nach der Montage des Druckmesswandlers in der Wandlerkammer eines Gehäuses die Wandlerkammer mit einer hydraulischen Übertragungsflüssigkeit befüllt werden kann.

Durch den schrägen Anschnitt der in Fläche 6 des Referenzdruckrohrs 5 ist die Endfläche, an welcher die metallisierte Folie zu befestigen ist, größer als bei einem geraden Anschnitt des Referenzdruckrohrs 5. Dies ermöglicht einen größeren Volumenhub der Folie 6, um Volumenschwankungen des im Referenzdruckpfad eingeschlossenen Gases auszugleichen. Das Volumen des abgeschlossenen Teils des Referenzdruckpfads kann beispielsweise zwischen 5 µl und 20 µl betragen, sodass bei einer Volumenschwankung um ± 25% die metallisierte Kunststofffolie einen Volumenhub von ± 1,25 Mikrolitern bis zu ± 5 µl aufnehmen muss. Dies ist aber ohne weiters möglich, insbesondere wenn die Folie ein aufgeprägtes Wellenmuster aufweist, um den verfügbaren Volumenhub zu vergrößern.

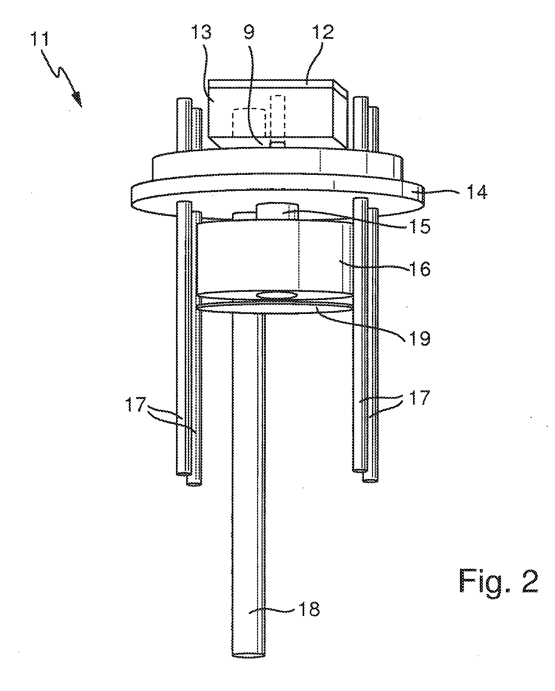

Figur 2 zeigt einen Druckmesswandler 11, bei dem ein Halbleiterchip 12 auf einem Substratkörper 13 mittels anodischen Verbindens befestigt ist. Der Substratkörper 13 ist mittels einer ringförmigen drucktragenden Klebung auf einem Trägerkörper 14 befestigt, wobei durch den Substratkörper 13, die drucktragende Klebung und eine damit fluchtende zentrale Bohrung durch den Trägerkörper 14 ein Referenzdruckpfad verläuft, der in einem Referenzdruckrohr 15, welches an dem Trägerkörper 14 befestigt ist, fortgesetzt wird. An den Referenzdruckrohr 15 ist ein Folienträgerkörper 16 montiert, durch den sich der Referenzdruckpfad fortsetzt. Der Folienträgerkörper 16 weißt im wesentlichen eine zylindrische Form auf, wobei sein Radius so gewählt ist, dass er zwischen elektrische Durchführungen 17 passt, die auf einem Kreisbogen um das Zentrum des Trägerkörper 14 angeordnet sind und sich durch diesen erstrecken. Durch den Trägerkörper 14 erstreckt sich weiterhin ein Befüllrohr 18, um nach der Montage des Druckmesswandlers in der Wandlerkammer eines Relativdrucksensors die Wandlerkammer mit einer hydraulischen Übertragungsflüssigkeit befüllen zu können. An einer dem Referenzdruckrohr 15 abgewandten Stirnfläche des Folienträgerkörpers 16 ist eine metallisierte Kunststofffolie 19 entlang einer umlaufenden Schweißnaht druckdicht befestigt, um einen Abschnitt des Referenzdruckpfades druckdicht zu verschließen. Der Folienträgerkörper 16 weist einen größeren Radius auf als das Referenzdruckrohr 15 und ermöglicht somit einen größeren Volumenhub, als wenn die Folie direkt an dem Referenzdruckrohr 15 befestigt wäre. In jedem Falle reicht der Volumenhub der gegebenenfalls mit einem Wellenmuster versehenen metallisierten Kunststofffolie 19 dazu aus, um Volumenschwankungen von einigen µl um die Gleichgewichtslage der Folie auszugleichen. Die dargestellte kompakte Bauweise des Druckmesswandlers mit der Positionierung des geschlossenen Abschnitts des Referenzdruckpfades noch im Bereich der elektrischen Durchführungen ermöglicht es, diese Erfindung ohne größeren Anpassungsaufwand zu implementieren, da beispielsweise der Folienträgerkörper 16 und die metallisierte Folie 19 zwischen dem Trägerkörper 14 und einer hier nicht dargestellten Vorverarbeitungsschaltung platziert werden kann, welche an die elektrischen Durchführungen 17 anschließt.

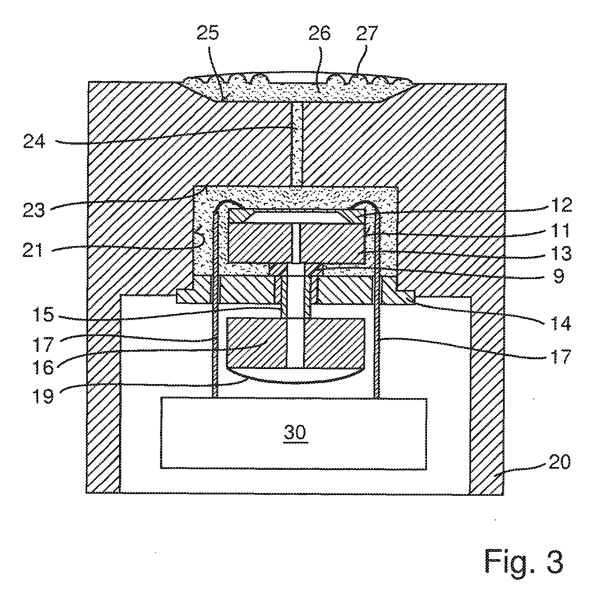

Figur 3 zeigt nun schematisch, wie der Druckmesswandler aus Figur 2 in einem Messwerkkörper angeordnet ist, um den erfindungsgemäßen Relativdrucksensor zu vervollständigen. Der Relativdrucksensor umfasst außer dem Druckesswandler 11 einen Messwerkkörper 20, in dem durch eine Sacklockbohrung eine Wandlerkammer 21 ausgebildet ist. Von einer der Wandlerkammer 21 abgewandten äußeren Oberfläche 22 des Messwerkkörpers 20 erstreckt sich eine Druckzuleitung 24 zu einer Stirnfläche 23 der Wandlerkammer 21. Die Druckzuleitung erfüllt vorzugsweise die Anforderung an eine Flammendurchschlagsperre. An der äußeren Oberfläche 22 ist ein Membranbett 25 ausgebildet, welches unter Bildung einer Druckeinleitungskammer 26, von einer Trennmembran 27 überdeckt ist, wobei die Trennmembran 27 entlang ihres Randes druckdicht mit der äußeren Oberfläche 22 verschweißt ist. Der Druckmesswandler 11 ist mit einem Siliziumchip 12 voran in die Wandlerkammer 21 eingesetzt, wobei der Trägerkörper 14 durch Hartlöten oder Schweißdruckdicht mit dem Messwerkkörper 20 verbunden ist. Das verbleibende freie Volumen in der Wandlerkammer 21, in der Druckzuleitung 24 und in der Druckeinleitungskammer 26 sind mit einer Übertragungsflüssigkeit, insbesondere einem Übertragungsöl gefüllt, um einen auf die Trennmembran 27 einwirkenden Druck auf die Messmembran des Druckmesswandlers zu übertragen. Die Auslenkungen der Messmembran des Druckmesswandlers hängen von der Differenz zwischen dem eingeleiteten Mediendruck und dem durch die Folie 19 in den geschlossenen Abschnitts des Referenzdruckpfads eingeleitete Atmosphärendruck ab. Die hier nicht im einzelnen dargestellten piezoresistiven Widerstandselemente des Halbleiterchips 12 sind über Kontaktpads und Bonddrähte mit den elektrischen Durchführungen 17 verbunden, die wiederum an eine Verarbeitungsschaltung 30 angeschlossen sind, durch welche die Widerstandselemente gespeist werden.

Durch die Begrenzung des abgeschlossenen Abschnitts des Referenzdruckpfads auf einen sehr kurzen Bereich zwischen dem Halbleiterchip 12 und der Verarbeitungsschaltung 30 ist das Volumen dieses Abschnitts sehr begrenzt, so dass der erforderliche Volumenhub von einer metallisierten Kunststofffolie geleistet werden kann, ohne den in den geschlossenen Abschnitts des Referenzdruckpfad eingeleiteten Atmosphärendruck zu verfälschen. Auf diese Weise wird die drucktragende Klebung 9 zwischen dem Substratkörper 13 und dem Trägerkörper 14 wirksam vor Feuchtigkeit geschützt, ohne die Druckmessung zu beeinträchtigen.

Die Kontaktierung der Wandlerschaltung kann beispielsweise in der Weise erfolgen, wie es in der Patentanmeldung mit dem Aktenzeichen 10 2009 001133 dargestellt ist. Gleichermaßen können die dort offenbarten Füllkörper in der Wandlerkammer vorgesehen sein, um das verbleibende Ölvolumen zu minimieren. Auf die Darstellung der Kontaktierung und der Füllkörper wird in der vorliegenden Anmeldung im Sinne der Übersichtlichkeit verzichtet.

## Patentansprüche

1. Relativdrucksensor umfassend:
einen Druckmesswandler (1, 11), wobei der Druckmesswandler eine Messmembran eines Halbleiterchips (2, 12) und einen Substratkörper (3, 13) aufweist, wobei zwischen der Messmembran und dem Substratkörper (3, 13) eine Referenzdruckka.mmer ausgebildet ist,
einen Trägerkörper (4, 14), wobei der Substratkörper (3, 13) mittels einer drucktragenden Klebung (9) mit dem Trägerkörper verbunden ist,
wobei sich durch den Substratkörper (3, 13) und den Trägerkörper (4, 14) ein Referenzdruckpfad erstreckt, um den Referenzdruck in die Referenzdruckkammer einzuleiten,
einen Messwerkkörper (20), in dem eine Wandlerkammer (21) ausgebildet ist,
wobei die Wandlerkammer (21) eine erste Öffnung und eine zweite Öffnung aufweist,
wobei der Druckmesswandler (1, 11) durch die erste Öffnung in die Wandlerkammer eingebracht ist und mittels des Trägerkörpers (4, 14) in der Wandlerkammer (21) gehalten wird,
wobei der Trägerkörper (4, 14) die erste Öffnung druckdicht verschließt, und
wobei eine der Referenzdruckkammer abgewandte Seite der Messmembran durch die zweite Öffnung mit dem Mediendruck beaufschlagbar ist,
**dadurch gekennzeichnet, dass**
der Referenzdruckpfad einen gasgefüllten, geschlossenen Abschnitt aufweist, der sich von der Referenzdruckkammer zumindest bis durch die drucktragende Klebung (9) erstreckt, wobei der geschlossene Abschnitt mittels einer flexiblen,
metallisierten Kunststofffolie (19) gasdicht verschlossen ist.

2. Relativdrucksensor nach Anspruch 1, wobei der gasgefüllte, geschlossene Abschnitt, sich zumindest bis durch den Trägerkörper (4, 14) erstreckt.

3. Relativdrucksensor nach Anspruch 1 oder 2, wobei der gasgefüllte, geschlossene Abschnitt ein Röhrchen (5, 15) aufweist, welches an dem Trägerkörper (4, 14) befestigt ist.

4. Relativdrucksensor nach Anspruch 3, an welchem die Kunststofffolie (19) entlang einer umlaufenden Dichtfläche gasdicht mit dem Röhrchen (5, 15) verbunden ist, wobei die umlaufende Dichtfläche eine Fläche umschließt, die größer ist als die Querschnittsfläche des Röhrchens.

5. Relativdrucksensor nach Anspruch 4, wobei das Röhrchen (5, 15) an seinem der Referenzdruckkammer abgewandten Ende eine Endfläche aufweist, deren Flächennormale gegenüber der Längsachse des Röhrchens (5, 15) verkippt ist.

6. Relativdrucksensor nach Anspruch 3 wobei an dem Röhrchen (5, 15) ein formsteifer Folienträgerkörper (16) durch den der gasgefüllte, geschlossene Abschnitt des Referenzdruckpfads sich erstreckt, wobei die Kunststofffolie (19) entlang einer umlaufenden Dichtfläche gasdicht mit dem Röhrchen (5, 15) verbunden ist, wobei die umlaufende Dichtfläche eine Fläche umschließt, die größer ist als die Querschnittsfläche des Röhrchens

7. Relativdrucksensor nach einem der vorhergehenden Ansprüche, wobei die erste Öffnung der Wandlerkammer (31) eine lichte Querschnittsfläche A₁ aufweist, und wobei der geschlossene Abschnitt des Referenzdruckpfads zwischen der Messmembran und der Folie einen Länge L aufweist, wobei gilt: L/(A₁/π)^{1/2} < 4, vorzugsweise L/(A₁/π)^{1/2} < 3.

8. Relativdrucksensor nach einem der vorhergehenden Ansprüche, wobei die erste Öffnung der Wandlerkammer (21) eine lichte Querschnittsfläche A₁ aufweist, wobei die senkrechte Projektion der Folie auf die Querschnittsfläche A₁ eine Projektionsfläche A₂ bildet, wobei gilt: A₂/A₁<1, insbesondere A₂/A₁<0,8.

9. Relativdrucksensor nach einem der vorherigen Ansprüche, wobei der Druckmesswandler (1, 11) ein (piezo-)resistiver mit mindestens zwei Widerstandselementen oder ein kapazitiver Druckmesswandler mit mindestens zwei Elektroden ist, wobei der Relativdrucksensor weiterhin eine elektronische Schaltung aufweist, deren Eingänge an die Widerstandselemente bzw. die Elektroden des Druckmesswandlers (1, 11) angeschlossen sind, wobei der geschlossene Abschnitt des Referenzdruckpfads räumlich zwischen dem Druckmesswandler und der elektronischen Schaltung angeordnet ist.

## Claims

1. Relative pressure sensor comprising:
a pressure transformer (1, 11), wherein the pressure transformer has a measuring membrane of a semiconductor chip (2, 12) and a substrate body (3, 13), wherein a reference pressure chamber is formed between the measuring membrane and the substrate body (3, 13),
a carrier body (4, 14), wherein the substrate body (3, 13) is connected to the carrier body via a pressurized bonding (9)
wherein a reference pressure path extends through the substrate body (3, 13) and the carrier body (4, 14) in order to direct the reference pressure into the reference pressure chamber
a meter body (20) in which a transformer chamber (21) is formed
wherein the transformer chamber (21) has a first opening and a second opening
wherein the pressure transformer (1, 11) is introduced into the transformer chamber through the first opening and is held in the transformer chamber (21) by means of the carrier body (4, 14)
wherein the carrier body (4, 14) seals the first opening in a pressure-tight fashion, and
wherein a side of the measuring membrane facing away from the reference pressure chamber can be exposed to the medium pressure through the second opening,
**characterized in that**
the reference pressure path has a gas-filled, closed section that extends from the reference pressure chamber through the pressurized bonding (9) at least, wherein the closed section is sealed in a gas-tight fashion by means of a flexible metalized plastic foil (19).

2. Relative pressure sensor as claimed in Claim 1, wherein the gas-filled, closed section extends as far as through the carrier body (4, 14) at least.

3. Relative pressure sensor as claimed in Claim 1 or 2, wherein the gas-filled, closed section has a pipe (5, 15) which is secured to the carrier body (4, 14).

4. Relative pressure sensor as claimed in Claim 3 on which the plastic foil (19) is connected in a gas-tight fashion with the pipe (5, 15) along a circumferential sealing surface, wherein the circumferential sealing surface surrounds an area that is larger than the cross-sectional area of the pipe.

5. Relative pressure sensor as claimed in Claim 4, wherein the pipe (5, 15) has an end surface at its end that faces away from the reference pressure chamber, the surface normal of said end surface being tilted in relation to the longitudinal axis of the pipe (5, 15).

6. Relative pressure sensor as claimed in Claim 3, wherein, on the pipe, a rigid-structure foil support body (16) extends through the gas-filled, closed section of the reference pressure path, wherein the plastic foil (19) is connected to the pipe in a gas-tight manner along a circumferential sealing surface, wherein the circumferential sealing surface surrounds an area that is larger than the cross-sectional area of the pipe.

7. Relative pressure sensor as claimed in one of the previous claims, wherein the first opening of the transformer chamber (31) has a clear cross-sectional area A₁, and wherein the closed section of the reference pressure path has a length L between the measuring membrane and the foil, wherein the following applies: L/(A₁/π)^{1/2} < 4, preferably L/(A₁/π)^{1/2} < 3

8. Relative pressure sensor as claimed in one of the previous claims, wherein the first opening of the transformer chamber (21) has a clear cross-sectional area A₁, wherein the vertical projection of the foil onto the cross-sectional area A₁, forms a projection surface A₂, wherein the following applies: A₂/A₁ < 1, particularly A₂/A₁ <0.8.

9. Relative pressure sensor as claimed in one of the previous claims, wherein the pressure transformer (1, 11) is a (piezo-)resistive pressure transformer with a least two resistor elements or a capacitance pressure transformer with at least two electrodes, wherein the relative pressure sensor furthermore has an electrical circuit whose inputs are connected to the resistor elements or the electrodes of the pressure transformer (1, 11), wherein the closed section of the reference pressure path is spatially arranged between the pressure transformer and the electronic circuit.

## Revendications

1. Capteur de pression relative comprenant :
un transducteur de pression (1, 11), le transducteur de pression comportant une membrane de mesure d'une puce semi-conducteur (2, 12) et un corps de substrat (3, 13), une chambre de pression de référence étant formée entre la membrane de mesure et le corps de substrat (3, 13),
un corps-support (4, 14), le corps de substrat (3, 13) étant relié avec le corps-support au moyen d'un collage (9) supportant la pression,
un circuit de pression de référence s'étendant à travers le corps de substrat (3, 13) et le corps-support (4, 14), afin d'établir la pression de référence dans la chambre de pression de référence,
un corps de mesure (20), dans lequel est formée une chambre de transducteur (21),
la chambre de transducteur (21) présentant une première ouverture et une deuxième ouverture,
le transducteur de pression (1, 11) étant introduit à travers la première ouverture dans la chambre de transducteur et maintenu au moyen du corps-support (4, 14) dans la chambre de transducteur (21),
le corps-support (4, 14) obturant de façon étanche à la pression la première ouverture, et
un côté de la membrane de mesure, opposé à la chambre de pression de référence, pouvant être alimenté avec la pression du produit à travers la deuxième ouverture,
**caractérisé en ce que**
le circuit de pression de référence présente une section fermée, remplie de gaz, qui s'étend de la chambre de pression de référence au moins jusqu'au collage (9) supportant la pression,
la section fermée étant obturée de façon étanche au gaz au moyen d'un film plastique (19) métallisé, flexible.

2. Capteur de pression relative selon la revendication 1, pour lequel la section fermée, remplie de gaz, s'étend au moins jusqu'au corps-support (4, 14).

3. Capteur de pression relative selon la revendication 1 ou 2, pour lequel la section fermée, remplie de gaz, comporte un tube (5, 15), lequel est fixé au corps-support (4, 14).

4. Capteur de pression relative selon la revendication 3, pour lequel le film plastique (19) est relié avec le tube (5, 15) de façon étanche au gaz, le long d'une surface d'étanchéité périphérique, la surface d'étanchéité périphérique renfermant une surface, qui est supérieure à l'aire de la section du tube.

5. Capteur de pression relative selon la revendication 4, pour lequel le tube (5, 15) présente en son extrémité opposée à la chambre de pression de référence une surface terminale, dont la normale à la surface est inclinée par rapport à l'axe longitudinal du tube.

6. Capteur de pression relative selon la revendication 3, pour lequel s'étend sur le tube un corps-support de film à travers la section fermée, remplie de gaz, du circuit de pression de référence, le film plastique (19) étant relié avec le tube (5, 15) de façon étanche au gaz, le long d'une surface d'étanchéité périphérique, la surface d'étanchéité périphérique renfermant une surface, qui est supérieure à l'aire de la section du tube.

7. Capteur de pression relative selon l'une des revendications précédentes, pour lequel la première ouverture de la chambre de transducteur (21) présentant une aire de section utile A₁, et pour lequel la section fermée du circuit de pression de référence présente entre la membrane de mesure et le film une longueur L, où s'applique la règle suivante : L/(A₁/π)^{1/2} < 4, de préférence L/(A₁/π)^{1/2} < 3.

8. Capteur de pression relative selon l'une des revendications précédentes, pour lequel la première ouverture de la chambre de transducteur (21) présente une aire de section utile A₁, la projection verticale du film sur l'aire de section A₁ formant une surface de projection A₂, où s'applique la règle suivante : A₂/A₁ < 1, notamment A₂/A₁ < 0,8.

9. Capteur de pression relative selon l'une des revendications précédentes, pour lequel le transducteur de pression (1, 11) est un transducteur de mesure (piézo)résistif avec au moins deux éléments de résistance ou capacitif avec deux électrodes, le capteur de pression relative comportant en outre un circuit électronique, dont les entrées sont raccordées aux éléments de résistance ou aux électrodes du transducteur de pression (1, 11), pour lequel la section fermée du circuit de pression de référence est disposée entre le transducteur de pression et le circuit électronique.
